# EUROPEAN PATENT APPLICATION

(11) **EP 4 717 130 A1**
(43) Date of publication of application: **01.04.2026**
(21) Application number: 25205163.6
(22) Date of filing: 29.09.2025
(51) Int. Cl.: A47J 27/08, A47J 36/32, G01D 21/02, A47J 27/086

(54) **SIGNAL DETECTION CIRCUIT, SIGNAL DETECTION SYSTEM AND COOKING DEVICE**

(30) Priority: 30.09.2024 CN 202411390272; 30.09.2024 CN 202422411750 U
(71) Applicant: Zhejiang Shaoxing Supor Domestic Electrical Appliance Co., Ltd., Shaoxing, Zhejiang 312017 (CN)
(72) Inventor: FANG, Bin, Shaoxing, 312071 (CN)
(74) Representative: LLR

(57) **Abstract**

The present application discloses a signal detection circuit, a signal detection system, and a cooking device. Relating to the field of signal detection technology, the signal detection circuit comprises: a sampling circuit 101, comprising a first resistor R1, a second resistor R2, and a third resistor R3 connected in series, wherein the second resistor R2 is a temperature sensor provided inside a target device, and the third resistor R3 is connected in parallel with a switch device K, the on/off state of the switch device K being determined by the device state of the target device; a first chip 102, which supplies power to the sampling circuit 101 and collects the voltage at a sampling point on the line between the first resistor R1 and the second resistor R2 to obtain a sampled signal value, which is used to represent the temperature and device state of the target device. This application solves the problem in the related art that the thermistor in the temperature detection module provided on the lid of a split-type electric pressure cooker can only sense temperature signals but cannot sense pressure signals, making it difficult to detect the pressure state inside the pot.

## Description

### Technical Filed

The present application relates to the field of signal detection technology, and in particular to a signal detection circuit, a signal detection system, and a cooking device.

### Background

Electric pressure cookers, with their ability to quickly cook food, are an indispensable cooking tool in modern kitchens. They come in both integrated and split versions. Split versions feature removable lids for easy cleaning and a wide range of applications.

Related art split-type electric pressure cookers utilize a temperature detection module on the lid to detect temperature signals and wirelessly transmit them to the main control module. However, the temperature detection module incorporates a thermistor, which can only sense temperature signals and not the pressure signal from the cooking device. To detect pressure signals from the cooking device, the detection chip needs to be redesigned, which is complex and costly.

Currently, no effective solution has been proposed to the problem that the thermistor in the temperature detection module installed on the lid of the split electric pressure cooker in the related art can only sense temperature signals but cannot sense pressure signals, making it difficult to detect the pressure state inside the pot.

### Summary of the Invention

This application provides a signal detection circuit, a signal detection system, and a cooking device to address problems in the related art.

According to one aspect of the application, a signal detection circuit is provided. The signal detection circuit comprises:
- A sampling circuit comprising a first resistor, a second resistor, and a third resistor connected in series. The second resistor is a temperature sensor located inside a target device. The third resistor is connected in parallel with a switch device, the on/off state of the switch device is configured to be controlled by the device state of the target device.
- A first chip, which supplies power to the sampling circuit through a first power port and collects the voltage at a sampling point on the line between the first and second resistors through a signal line to obtain a sampled signal value.

This solves the problem in the related art that the thermistor in the temperature detection module installed on the lid of a split-type electric pressure cooker can only sense temperature signals but cannot sense pressure signals, making it difficult to detect the pressure state in the cooker. In the sampling circuit, the resistor connected in series with the temperature sensor is connected in parallel to a switch device, the on/off state of which is determined by the device state. The sampled signal value collected from the sampling point can simultaneously represent both the device temperature and the device state, thereby achieving the effect of the detection circuit simultaneously detecting both the temperature and pressure state in the electric pressure cooker.

Optionally, the second resistor has a resistance range of 0.1KΩ-100KΩ, and the third resistor has a resistance range of 10KΩ-100KΩ. The resistance value of the third resistor is set according to the characteristic that the resistance value of the second resistor changes with temperature, so that the device status and temperature can be accurately determined based on the sampled signal value.

Optionally, a bias resistor is connected in series between the first and second resistors. The bias resistor has a resistance range of 0KΩ-30KΩ, and the first resistor has a resistance range of 2KΩ-30KΩ. The resistance of the first resistor is set according to the resistance of the bias resistor of the first chip, ensuring that the sampling circuit configuration meets the operation requirements of the first chip.

Optionally, the signal detection circuit further includes:
- A first wireless power supply circuit comprising a first coupling coil connected in parallel at both ends of the second and third power ports of the first chip, and a first capacitor connected in parallel with the first coupling coil, wherein the first coupling coil is configured to obtain electrical energy and charge the first capacitor, the first capacitor in turn discharges the electrical energy to the second wireless power supply circuit; and
- A second wireless power supply circuit comprising a second capacitor connected in series between the fourth power port of the first chip and a ground line, and a fourth resistor connected in parallel with the second capacitor, wherein the first capacitor charges the second capacitor through the fourth resistor, and the second capacitor supplies power to the first chip through the fourth resistor.

The signal detection circuit can be a wireless module that is charged via wireless charging, making it suitable for signal detection in a separate (split) target device.

According to another aspect of the present application, a signal detection system is provided. The signal detection system includes:
- the aforementioned signal detection circuit, which is mounted on a target device and configured to collect sampled signal values and transmit them to a signal processing circuit;
- the signal processing circuit, which wirelessly communicates with the signal detection circuit, is configured to power the signal detection circuit and receive the sampled signal values, determine the target device's device state based on a pre-stored relationship between the preset sampling signal values and the preset device states, and determine the target device's temperature based on a pre-stored relationship between the preset sampling signal values and preset temperature values under different device states.

In the sampling circuit of the signal detection circuit, a resistor connected in series with the temperature sensor is connected in parallel with a switch device, the on/off state of the switch device is determined by the device state. The sampled signal values collected from the sampling point simultaneously represent both the device temperature and the device state. The signal processing circuit determines both the device state and the device temperature based on the pre-stored relationship data between the preset sampling signal values, the device states, and the device temperatures, thereby enabling the detection circuit to simultaneously detect both the temperature and pressure in the electric pressure cooker.

Optionally, the signal processing circuit includes:
- an RF (Radio Frequency) gain circuit, connected to a second chip, including a second coupling coil, and configured to control the oscillation of the second coupling coil to charge the signal detection circuit and receive the sampled signal;
- a detection processing circuit, connected to the second chip, and configured to perform detection processing on the sampled signal values and transmit the processed signal values to the second chip; and
- the second chip, configured to determine the device state of the target device based on a pre-stored relationship between the preset sampling signal values and preset device states, and determine the temperature of the target device based on a pre-stored relationship between the preset sampling signal values and the preset temperature values under different device states.

Through the cooperation of the RF gain circuit, the detection processing circuit, and the second chip, the signal processing circuit supplies power to the signal detection circuit, acquires the sampled signal value detected by the signal detection circuit, and further determines the device temperature and device state based on the sampled signal value.

According to another aspect of the present application, a cooking device is provided. The cooking device includes:
- the aforementioned signal detection system;
- a pot;
- a lid disposed on top of the pot; the lid being used to seal the pot body. The signal detection circuit in the signal detection system is disposed on the lid, and the signal processing circuit in the signal detection system is disposed on the pot.
- a microcontroller unit, which is connected in communication to the signal processing circuit and configured to retrieve the temperature and device state stored in the signal processing circuit and control the operation of the pot based on the temperature and device state.

The sampled signal values collected by the signal detection circuit on the lid can reflect the device temperature and device pressure status. The signal processing circuit disposed on the pot obtains the sampled signal values via wireless transmission and processes them into the device temperature and device pressure state. This allows the signal detection circuit to simultaneously detect the temperature and pressure state in the electric pressure cooker, thereby improving the cooking quality and efficiency of the cooking device.

Optionally, the lid is provided with a stopper lever, the open/closed state of which is configured to control the on/off state of the switch device. The on/off state of the switch device is correlated with the open/closed state of the stopper lever in the cooking device. The open/closed state of the stopper lever reflects the pressure state of the cooking device, thereby enabling the on/off state of the switch device to reflect the pressure state of the cooking device.

Optionally, the stopper lever is connected to a trigger member, and the switch device is an inductive switch. The trigger member is configured to trigger the on and off of the inductive switch. When the cooking device is in an unpressurized state, the stopper lever drives the trigger member away from the inductive switch when it is opened. If the inductive switch does not sense the trigger member, it is in an off state. When the cooking device is in a pressurized state, the stopper lever drives the trigger member to approach the inductive switch when it is closed. If the inductive switch senses the trigger member, it is in a closed state. The cooperation between the trigger member and the inductive switch allows accurate detection of the pressure state in the pot.

Optionally, the trigger element is a magnet, and the inductive switch is a magnetic witch. When the cooking device is in an unpressurized state, the stopper lever drives the magnet away from the magnetic switch when it is opened. If the magnetic switch cannot detect the magnet, it is in an open state. When the cooking device is in a pressurized state, the stopper lever drives the magnet to approach the magnetic switch. If the magnetic switch detects the magnet, it is in a closed state. The magnet and the magnetic switch cooperate to accurately detect the pressure state in the pot.

In this application, a sampling circuit in a signal detection circuit includes a first resistor, a second resistor, and a third resistor connected in series. The second resistor is a temperature sensor located in the target device. The third resistor is connected in parallel to a switch device, the on/off state of which is determined by the device status of the target device. The first chip in the signal detection circuit supplies power to the sampling circuit via a first power port, and collects the voltage at a sampling point on the line between the first and second resistors through the signal line to obtain a sampled signal value. This solves the problem in related art where the thermistor in the temperature detection module on the lid of a split-type electric pressure cooker can only sense temperature signals but cannot sense pressure signals, making it difficult to detect the pressure state in the pot. In the sampling circuit, a switch device is connected in parallel with the resistor in series with the temperature sensor. The open and closed state of the switch device is determined by the device state. The sampled signal value collected from the sampling point can simultaneously represent the device temperature and device state, thereby achieving the effect of the detection circuit simultaneously detecting the temperature and pressure state inside the electric pressure cooker.

### Brief Description of the Drawings

The drawings that constitute a part of this application are used to provide further understanding of this application. The illustrative embodiments of this application and their descriptions are used to explain this application and do not constitute improper limitations on this application. In the accompanying drawings:
Figure 1 is a schematic diagram of a signal detection circuit according to an embodiment of the present application;
Figure 2 is a schematic diagram of an optional signal detection circuit according to an embodiment of the present application;
Figure 3 is a schematic diagram of a signal detection system according to an embodiment of the present application;
Figure 4 is a schematic diagram of an optional RF gain circuit according to an embodiment of the present application;
Figure 5 is a schematic diagram of an optional detection processing circuit according to an embodiment of the present application;
Figure 6 is a schematic diagram of an optional second chip according to an embodiment of the present application;
Figure 7 is a schematic diagram of a cooking device according to an embodiment of the present application;

In which: 10, signal detection circuit; 11, signal processing circuit; 101, sampling circuit; 102, first chip; 103, first wireless power supply circuit; 104, second wireless power supply circuit; 21, pot body; 22, pot lid; 30, microcontroller unit; R1, first resistor; R2, second resistor; R3, third resistor; R4, fourth resistor; REF, bias resistor; C1, first capacitor; C2, second capacitor; K, switch device; L1, first coupling coil; L2, second coupling coil.

### Detailed Description of Embodiments

It should be noted that, unless there is a conflict, the embodiments and features within these embodiments may be combined with one another. The present application will be described in detail below with reference to the accompanying drawings and in conjunction with the embodiments.

To help those skilled in the art better understand the present invention, the technical solutions within the embodiments of this application will be clearly and completely described below with reference to the accompanying drawings. Obviously, the described embodiments are only a portion of the embodiments of this application, and not all of them. All other embodiments derived by persons of ordinary skill in the art based on the embodiments of this application without inventive effort should fall within the scope of protection of this application.

It should be noted that the terms "first," "second," and so on, in the specification and claims of this application, and in the accompanying drawings, are used to distinguish similar objects and are not necessarily used to describe a specific order or precedence. It should be understood that the terms used in this manner are interchangeable where appropriate for the purposes of describing the embodiments of this application. Furthermore, the terms "including," "comprising," and "having," and any variations thereof, are intended to cover non-exclusive inclusions. For example, a process, method, system, product, or apparatus comprising a series of steps or elements is not necessarily limited to those explicitly listed steps or elements but may include other steps or elements not explicitly listed or inherent to the process, method, product, or apparatus.

According to an embodiment of the present application, a signal detection circuit is provided.

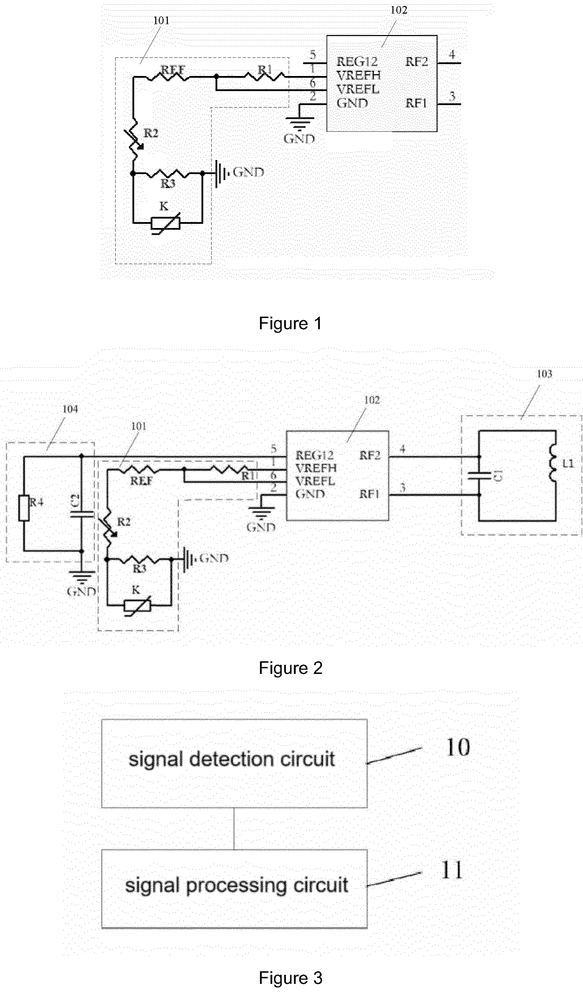

Figure 1 is a schematic diagram of a signal detection circuit according to an embodiment of the present application. As shown in Figure 1, the signal detection circuit includes the following components:
Sampling circuit 101, includes a first resistor R1, a second resistor R2, and a third resistor R3 connected in series. The second resistor R2 is a temperature sensor located within the target device. The third resistor R3 is connected in parallel with a switch device K. The on/off state of switch device K is configured to be controlled by the device status of the target device.

It should be noted that the target device can be a cooking device, such as an electric pressure cooker. The device status can be either unpressurized or pressurized. The unpressurized state means that the pressure within the electric pressure cooker is close to or equal to ambient pressure, while the pressurized state means that the pressure within the electric pressure cooker is higher than ambient pressure. The on/off state of switch device K is associated with the device status of the target device. The on/off state of switch device K varies depending on the device status. For example, if the pressure cooker is unpressurized, switch device K is in the open state (off state); if the pressure cooker is pressurized, switch device K is in the closed state (on state).

One end of the sampling circuit 101 is connected to the first power port of the first chip 102 (the interface indicated by the VREFH pin in Figure 1), and the other end of the sampling circuit 101 is grounded. The first chip 102 supplies power to the sampling circuit 101. When the switch device K is in the off state, the first resistor R1, the second resistor R2, and the third resistor R3 divide the voltage. When the switch device K is in the on state, the third resistor R3 is short-circuited, and the first resistor R1 and the second resistor R2 divide the voltage.

The first chip 102 supplies power to the sampling circuit 101 through the first power port and collects the voltage at a sampling point on the line between the first resistor R1 and the second resistor R2 through a signal line to obtain a sampled signal value.

The signal line of the first chip 102 is connected from the pin VREFL to the sampling point. The voltage at the sampling point is the voltage relative to ground at the sampling point. The first resistor R1 can be connected to the first power port, and the third resistor R3 can be connected to ground. When the switch device K is in the off state, the first resistor R1, the second resistor R2, and the third resistor R3 divide the voltage. The voltage at the sampling point is the total divided voltage value of the second resistor R2 and the third resistor R3. The sampled signal value is a digitized voltage value, which can be the total divided voltage value of the second resistor R2 and the third resistor R3, or the inverse of the total divided voltage value of the second resistor R2 and the third resistor R3, i.e., the divided voltage value of the first resistor R1. When the switch device K is in a closed state, the first resistor R1 and the second resistor R2 divide the voltage. The voltage at the sampling point is the divided voltage value of the second resistor R2. The sampled signal value can be the divided voltage value of the second resistor R2 or the inverse of the divided voltage value of the second resistor R2, that is, the divided voltage value of the first resistor R1.

The temperature sensor can be a thermistor. On the one hand, whether the switch device K is in an open or closed state, the resistance and divided voltage value of the thermistor will change with the internal temperature of the target device. The voltage value of the sampling point to ground will also change with temperature, and the sampled signal value will also change with temperature. Therefore, the sampled signal value can be used to represent the temperature of the target device. On the other hand, the law of change of the thermistor's divided voltage value with temperature is different, the law of change of the voltage value at the sampling point to ground with temperature is different, and the law of change of the sampled signal value with temperature is different, when the switch device K is in the open state and in the closed state. Therefore, the sampled signal value can be used to represent the device status of the target device.

It should be noted that there is a solution in the related art of setting up two parallel detection circuits to measure the temperature and pressure state of the cooking device respectively. On the one hand, when the temperature or pressure status changes, the two detection signals change simultaneously, which will cause crosstalk and affect the accuracy of temperature and pressure status detection. On the other hand, it is necessary to sample the sampling signals of two signal detection points and process the two signals separately in the chip to determine the temperature and pressure status of the cooking device, which requires the design of two signal acquisition channels and two signal processing programs in the chip. In this application, a switch device K is provided in parallel with the voltage divider resistor in the sampling circuit 101. The collected sampling signal value can accurately represent the device temperature and device status simultaneously, and the device temperature and device status can be collected at a low cost without changing the chip design of the sampling circuit 101.

The signal detection circuit provided in the embodiments of the present application comprises a sampling circuit 101 comprising a first resistor R1, a second resistor R2, and a third resistor R3 connected in series. The second resistor R2 is a temperature sensor provided within the target device. The third resistor R3 is connected in parallel to a switch device K, the on/off state of which is determined by the device status of the target device. A first chip 102 supplies power to the sampling circuit 101 through a first power port and collects the voltage at a sampling point on the line between the first resistor R1 and the second resistor R2 through a signal line to obtain a sampled signal value. This solves the problem in the related art where the thermistor in the temperature detection module installed on the lid of a split-type electric pressure cooker can only sense temperature signals but cannot sense pressure signals, making it difficult to detect the pressure state within the cooker. In the sampling circuit 101, the resistor connected in series with the temperature sensor is connected in parallel to a switch device, the on/off state of which is determined by the device status. The sampled signal value collected from the sampling point can simultaneously represent both the device temperature and the device status, thereby achieving the effect that only one single signal detection circuit and sampling at one sampling point is needed for simultaneously detecting both the temperature and pressure state values in the electric pressure cooker.

Optionally, in the signal detection circuit provided in an embodiment of the present application, the resistance range of the second resistor R2 is 0.1 kΩ-100 kΩ, and the resistance range of the third resistor R3 is 10 kΩ-100 kΩ.

The second resistor R2 may be an NTC (Negative Temperature Coefficient) thermistor, with a resistance range of 0.1 kΩ-100 kΩ, to meet the detection accuracy requirements in different temperature detection scenarios.

For example, if the target device is an electric pressure cooker and the third resistor R3 and the second resistor R2 have the same resistance level (for example, the second resistor R2 has a resistance of 50 kΩ and the third resistor R3 has a resistance range of 10 kΩ-100 kΩ). If the resistance of the third resistor R3 is large, the temperature measurement uncertainty range can be reduced when the reed switch fails due to short circuit. For example, if the second resistor R2 is an NTC thermistor with a resistance of 100 kΩ, and the third resistor R3 has a resistance of 30 kΩ, the temperature measurement uncertainty range can be controlled below 50°C. If the third resistor R3 has a resistance of 50 kΩ, the temperature measurement uncertainty range can be controlled below 40°C. Furthermore, the third resistor R3 should not be too large. If the third resistor R3 is too large, the divided voltage of the first resistor R1 will be too small, resulting in low resolution of high-temperature data after the reed switch fails to open the circuit.

Through this embodiment, the resistance of the third resistor R3 is set according to the characteristic that the resistance of the second resistor R2 changes with temperature, so as to achieve the purpose of accurately determining the device status and temperature according to the sampled signal value.

Optionally, in the signal detection circuit provided in the embodiments of the present application, a bias resistor REF is connected in series between the first resistor R1 and the second resistor R2. The bias resistor REF has a resistance range of 0 kΩ to 30 kΩ, and the first resistor R1 has a resistance range of 2 kΩ to 30 kΩ.

The sampling circuit 101 may also include resistors other than the first resistor R1, the second resistor R2, and the third resistor R3. Considering the half-bias characteristic of the first chip 102 (meaning that the voltage applied to the first chip 102 or its internal components is half of its normal operating voltage), the bias resistor REF is connected in series between the first resistor R1 and the second resistor R2, and the resistance of the first resistor R1 needs to be close to that of the bias resistor REF. For example, if the bias resistor REF has a resistance of 21 kΩ, the second resistor R1 can be 20 kΩ. Furthermore, the first resistor R1, the second resistor R2, and the third resistor R3 perform voltage division. The second and third resistors R2 and R3 must match the resistance of the first resistor R1. Their resistances can be set within the same range (for example, the first resistor R1 has a resistance of 1 kΩ, while the second and third resistors R2 and R3 have resistances ranging from 1 kΩ to 10 kΩ). When these resistances are within the same range, the resistance of the first resistor R1 should not be too large or too small. If the resistance of the first resistor R1 is too small, inaccurate measurements will occur in the high-temperature range, while if the resistance of the first resistor R1 is too large, inaccurate measurements will occur in the low-temperature range.

In this embodiment, the resistance of the first resistor R1 is set according to the resistance of the bias resistor REF of the first chip 102, so that the configuration of the sampling circuit 101 can meet the operating requirements of the first chip 102.

The signal detection circuit can be a wireless module that is charged via wireless charging. Optionally, in the signal detection circuit provided in the embodiment of the present application, the signal detection circuit further includes: a first wireless power supply circuit 103, comprising a first coupling coil L1 connected in parallel at both ends of the second power port and the third power port of the first chip 102, and a first capacitor C1 connected in parallel with the first coupling coil L1. The first coupling coil L1 is used to obtain electrical energy and charge the first capacitor C1, and the first capacitor C1 is used to discharge the electrical energy to the second wireless power supply circuit 104; a second wireless power supply circuit 104, comprising a second capacitor C2 connected in series between the fourth power port and the ground line of the first chip 102, and a fourth resistor R4 connected in parallel with the second capacitor C2. The first capacitor C1 charges the second capacitor C2 through the fourth resistor R4, and the second capacitor C2 supplies power to the first chip 102 through the fourth resistor R4.

FIG2 is a schematic diagram of an optional signal detection circuit according to an embodiment of the present application. As shown in FIG2, the second power port of the first chip 102 is an interface indicated by the RF1 pin, the third power port of the first chip 102 is an interface indicated by the RF2 pin, and the first coupling coil L1 can be a radio frequency coil. When the signal processing circuit provided with a power supply generates an electromagnetic field through the radio frequency coil, the first coupling coil L1 generates a current through the electromagnetic field and charges the first capacitor C1. The radio frequency coil of the signal processing circuit provided with a power supply continuously oscillates, and the first capacitor C1 intermittently charges energy to the second capacitor C2 through the circuit within the first chip 102. When the first capacitor C1 charges the second capacitor C2, the fourth resistor R4 acts as a charging resistor. When the first capacitor C1 stops charging the second capacitor C2, the second capacitor C2 supplies power to the first chip 102, and the fourth resistor R4 acts as a discharge resistor. When receiving power, the first chip 102 powers up and supplies power to the sampling circuit 101.

In this embodiment, the signal detection circuit can be a wireless module that is charged via wireless charging, making the signal detection circuit suitable for signal detection in a split (separate) target device.

An embodiment of the present application also provides a signal detection system.

Figure 3 is a schematic diagram of a signal detection system according to an embodiment of the present application. As shown in Figure 3, the system includes:
A signal detection circuit 10 according to any one of the above-described embodiments is configured to be mounted on the target device, collects sampled signal values, and transmits the sampled signal values to a signal processing circuit 11.

It should be noted that the target device can be a cooking device, such as an electric pressure cooker. The signal detection circuit 10 is mounted on the electric pressure cooker and samples sampled signal values representing the temperature and device status of the electric pressure cooker. The signal detection circuit 10 can be a wireless module that transmits the sampled signal values to the signal processing circuit 11 via wireless transmission.

The signal processing circuit 11 wirelessly communicates with the signal detection circuit 10, powers the signal detection circuit 10, receives the sampled signal values, determines the device status of the target device based on the pre-stored relationship between the preset sampling signal value and the preset device status, and determines the temperature of the target device based on a pre-stored relationship between the preset sampling signal value and the preset temperature values for different device states.

On the one hand, the signal processing circuit 11 generates an electromagnetic field through the second coupling coil L2, which powers the signal detection circuit 10 through electromagnetic induction. On the other hand, the second coupling coil L2 of the signal processing circuit 11 and the coupling coil L1 of the signal detection circuit 10 communicate at a predetermined resonant frequency. The coupling coil L1 of the signal detection circuit 10 transmits sampled signal values at the predetermined resonant frequency, and the signal processing circuit 11 receives the sampled signal values transmitted by the signal detection circuit 10 at the predetermined resonant frequency.

It should be noted that because the sampled signal values represent the temperature and device status of the target device, the signal processing circuit 11 can determine the temperature and device status of the target device based on the sampled signal values.

The signal processing circuit 11 pre-stores first relationship data between preset sampling signal values and preset device states. For example, the first relationship data may be: a preset sampled signal value less than a preset signal threshold corresponds to a first device state, and a preset sampled signal value greater than or equal to the preset signal threshold corresponds to a second device state. Therefore, the device state can be determined based on the acquired sampled signal value and the pre-stored first relationship data.

The signal processing circuit 11 also pre-stores second relationship data between the preset sampling signal values and preset temperature values under different device states. The second relationship data may include a first curve and a second curve. The first curve represents the relationship between the preset sampling signal values and the preset temperature values under the first device state, and the second curve represents the relationship between the preset sampling signal values and the preset temperature values under the second device state. The device state can be determined based on the acquired sampled signal value and the pre-stored first relationship data. The temperature corresponding to the sampled signal value is then retrieved from the curve corresponding to the corresponding device state to obtain the target device temperature.

In an optional embodiment, the target device is a cooking device, the first device state is an unpressurized state, and the second device state is a pressurized state. When the cooking device is in the unpressurized state, the switch device K in the signal detection circuit 10 is switched off, and the first resistor R1, the second resistor R2, and the third resistor R3 participate in the voltage division. The first curve is the inverse of the voltage value of the second resistor R2 and the third resistor R3 relative to ground, that is, the voltage division value of the first resistor R1. The first curve is a relationship curve between the voltage division value of the first resistor R1 and the temperature of the cooking device. When the cooking device is in the pressurized state, the switch device K in the signal detection circuit 10 is closed, and the first resistor R1 and the second resistor R2 participate in the voltage division. The first curve is the inverse of the voltage value of the second resistor R2 to ground, that is, the voltage division value of the first resistor R1.

The second curve is a relationship curve between the voltage division value of the first resistor R1 and the temperature of the cooking device. The preset signal threshold is set to the sampling signal value corresponding to any temperature value greater than the boiling point in the first curve, for example, it can be the sampling signal value corresponding to any temperature value between 130°C and 150°C, thereby avoiding inaccurate temperature measurement when the switch device K fails.

The signal detection system provided by an embodiment of the present application comprises: the signal detection circuit 10 in any of the above embodiments, which is used to be set on the target device and is used to collect the sampled signal value and send the sampled signal value to the signal processing circuit 11; the signal processing circuit 11 wirelessly communicates with the signal detection circuit 10, is used to power the signal detection circuit 10, and is also used to receive the sampled signal value, determine the device state of the target device based on the pre-stored relationship between the preset sampling signal value and the preset device state, and determine the temperature of the target device based on the pre-stored relationship between the preset sampling signal value and the preset temperature value under different device states, thereby solving the problem that the thermistor in the temperature detection module on the lid of the split electric pressure cooker in the related art can only sense the temperature signal but cannot sense the pressure signal, making it difficult to detect the pressure state inside the pot. In the sampling circuit 101 of the signal detection circuit 10, the resistor connected in series with the temperature sensor is connected in parallel with a switch device. The on/off state of the switch device is determined by the device state. The sampling signal value collected from the sampling point can simultaneously represent the device temperature and the device state. The signal processing circuit 11 determines the device state and device temperature based on pre-stored relationship data between the preset sampling signal value, the device state, and the device temperature. This allows the detection circuit to simultaneously detect the temperature and pressure state inside the electric pressure cooker.

Optionally, in the signal detection system provided in an embodiment of the present application, the signal processing circuit 11 includes: an RF gain circuit, connected to the second chip, including a second coupling coil L2, configured to control the oscillation of the second coupling coil L2 to charge the signal detection circuit 10 and receive the sampled signal; a detection processing circuit, connected to the second chip, configured to perform detection processing on the sampled signal and transmit the processed signal to the second chip; and the second chip configured to determine the device state of the target device based on a pre-stored relationship between the preset sampling signal value and the preset device state, and to determine the temperature of the target device based on a pre-stored relationship between the preset sampling signal value and the preset temperature value under different device states.

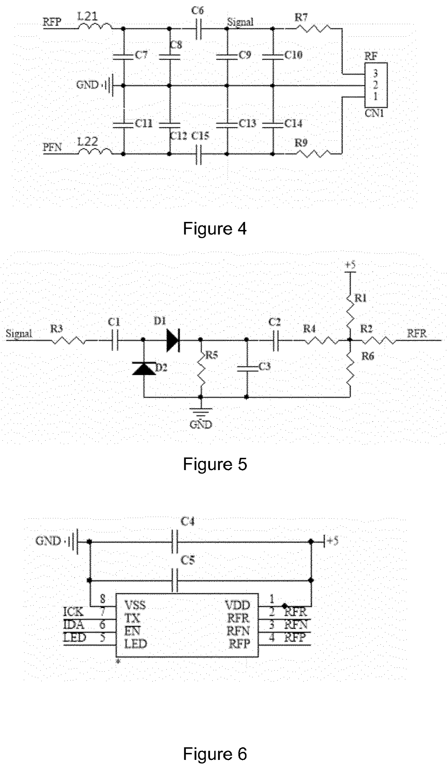

Figure 4 is a schematic diagram of an optional RF gain circuit according to an embodiment of the present application. As shown in Figure 4, the second coupling coil L2 is composed of a coil L21 and a coil L22. Coils L21 and L22 are configured to transmit an oscillating signal, transferring energy to the first coupling coil L1 in the sampling circuit 101 via the coil RF. Coils L21 and L22 are also configured to receive the sampled signal value transmitted by the first coupling coil L1. The Signal terminal is configured to be connected to the detection processing circuit to transmit the sampled signal value to the detection processing circuit.

Figure 5 is a schematic diagram of an optional detection processing circuit according to an embodiment of the present application. As shown in Figure 5, the Signal terminal of the detection processing circuit is configured to be connected to the RF gain circuit to receive sampled signal values. After performing detection processing on the sampled signal values, the sampled signal values are transmitted to the second chip through the RFR terminal.

Figure 6 is a schematic diagram of an optional second chip according to an embodiment of the present application. As shown in Figure 6, the RFR pin of the second chip is configured to be connected to the RFR terminal of the detection processing circuit to receive the sampled signal values after detection processing. The RFP and RFN pins of the second chip are configured to be connected to the RFP and RFN terminals of the RF gain circuit, respectively, to control the RF gain circuit. The LED pin of the second chip is configured to be connected to an LED indicator. The CN1 pin is used for debugging the chip, the IDA pin is used for program programming (copying or loading), and the ICK pin is used for signal input and output. Capacitors C4 and C5 serve as filter capacitors for the second chip.

Through the cooperation of the RF gain circuit, the detection processing circuit, and the second chip, the signal processing circuit 11 supplies power to the signal detection circuit 10, acquires the sampled signal values detected by the signal detection circuit 10, and further determines the device temperature and device status based on the sampled signal values.

An embodiment of the present application also provides a cooking device.

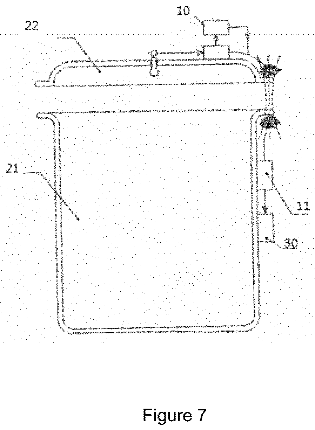

Figure 7 is a schematic diagram of a cooking device according to an embodiment of the present application. As shown in Figure 7, the cooking device includes:
- The signal detection system of any of the above-described embodiments.
- A pot 21 and a lid 22 disposed on top of pot 21, the lid 22 being used to seal the pot 21. The signal detection circuit 10 of the signal detection system is disposed on the lid 22, and the signal processing circuit 11 of the signal detection system is disposed on the pot 21.

It should be noted that the cooking device in this embodiment can be a split electric pressure cooker with detachable pot 21 and lid 22. The signal detection circuit 10 is mounted on the lid 22. To ensure portability, the signal detection circuit 10 does not include a power supply or charger. Instead, it is a wireless module. When the lid 22 is closed, the pot 21 and lid 22 are in contact. The signal detection circuit 10 is within the induction range of the signal processing circuit 11. The signal processing circuit 11 then powers the signal detection circuit 10 via wireless charging. The signal detection circuit 10 then wirelessly transmits the detected sampled signal values to the signal processing circuit 11, which then processes the sampled signal values into temperature value and device status.
- A microcontroller unit 30, which is in communication with the signal processing circuit 11 and is used to access the temperature and device status stored in the signal processing circuit 11 and controls the operation of the pot 21 based on these values.

Specifically, during the operation of the cooking device, the microcontroller unit 30 continuously accesses the temperature and device status collected by the signal processing circuit 11 to obtain the real-time temperature and pressure status inside the cooking device. Based on the temperature, the microcontroller unit 30 determines the cooking process phase to enter. Furthermore, when the pressure inside the pot changes to a non-pressurized state during the venting phase, a lid-opening signal is output, thereby resolving the issue of long waiting time for users for venting the pot. Furthermore, the temperature corresponding to when the pressure in the pot changes to the non-pressurized state during the venting phase is the boiling point, enabling accurate detection of the boiling point. This allows accurate control of the cooking temperature according to the exact boiling point when cooking porridge or soup, ensuring adequate cooking while preventing overflow.

The cooking device provided in an embodiment of the present application comprises: a signal detection system according to any of the above embodiments; a pot 21; and a lid 22 disposed on top of the pot 21, the lid 22 being used to seal the pot 21. The signal detection circuit 10 in the signal detection system is disposed on the lid 22, and the signal processing circuit 11 in the signal detection system is disposed on the pot 21; and a microcontroller unit 30, which is in communication with the signal processing circuit 11 and is configured to access the temperature and device status stored in the signal processing circuit 11 and control the operation of the pot 21 based on the temperature and device status. This solves the problem in the related art that the thermistor in the temperature detection module disposed on the pot lid of a split-type electric pressure cooker can only sense temperature signals but cannot sense pressure signals, making it difficult to detect the pressure state in the pot. The sampled signal values collected by the signal detection circuit 10 disposed on the lid 22 can reflect the device temperature and device pressure state. The signal processing circuit 11 disposed on the pot 21 obtains the sampled signal values via wireless transmission and processes them into the device temperature and device pressure state. This achieves the effect of simultaneously detecting the temperature and pressure state in the electric pressure cooker by one single signal detection circuit, thereby improving the cooking quality and efficiency of the cooking device.

Optionally, in the cooking device provided in the embodiments of the present application, a stopper lever is provided on the lid 22. The open/closed state of the stopper lever is configured to control the on/off state of the switch device K.

It should be noted that the stopper lever is located at the edge of the lid 22 of the electric pressure cooker. When the internal pressure of the electric pressure cooker rises to the pressurized state, the stopper lever is pushed to the closed position by the internal pressure, locking the lid 22 and preventing accidental opening due to excessive pressure. When the stopper lever is open, the pot is in the unpressurized state, and the switch device K can be in the off (open) state. When the stopper lever is closed, the pot is in the pressurized state, and the switch device K can be in the closed (on) state, thereby establishing a correlation between the on/off state of the switch device K and the open/closed state of the stopper lever.

Through this embodiment, the on/off state of the switch device K is correlated with the open/closed state of the stopper lever in the cooking device. The open/closed state of the stopper lever reflects the pressure state of the cooking device, and thus the on/off state of the switch device K reflects the pressure state of the cooking device.

Optionally, in the cooking device provided in an embodiment of the present application, the stopper lever is connected to a trigger member, and the switch device K is an inductive switch. The trigger member is configured to trigger the on and off of the inductive switch.

Specifically, when the cooking device is in an unpressurized state, the stopper lever drives the trigger member away from the inductive switch when it is opened. If the inductive switch does not sense the trigger member, it is in an off (opened) state. When the cooking device is in a pressurized state, the stopper lever drives the trigger member to approach the inductive switch when closing. If the inductive switch senses the trigger member, it is in a closed (on) state. The cooperation between the trigger member and the inductive switch can accurately detect the pressure state in the pot.

Optionally, in the cooking device provided in an embodiment of the present application, the trigger member is a magnet, and the inductive switch is a magnetically controlled switch (magnetic switch).

Specifically, the cooking device may be an electric pressure cooker, and the magnetic switch may be a reed switch, a Hall effect element, or the like. For example, if the magnetic switch is a reed switch, when the pot is in an unpressurized state, the stopper lever drives the magnet away from the reed switch when it is open. If the reed switch cannot detect the magnet, it is in the off (open) state. When the pot is in a pressurized state, the stopper lever drives the magnet to approach the reed switch when it is closed. If the reed switch detects the magnet, it is in the closed (on) state. The cooperation of the magnet and the reed switch can accurately detect the pressure state in the pot.

It should also be noted that the terms "comprise," "include," or any other variations thereof are intended to cover non-exclusive inclusion, such that a process, method, product, or apparatus comprising a list of elements may include not only those elements but also other elements not explicitly listed, or elements inherent to such process, method, product, or apparatus. Without further limitation, the phrase "comprising a..." does not preclude the presence of other identical elements in the process, method, product, or apparatus comprising the elements.

The above are merely examples of the present application and are not intended to limit the present application. Various modifications and variations of the present application will be apparent to those skilled in the art. Any modifications, equivalent substitutions, improvements, etc. made within the spirit and principles of this application should be included in the scope of the claims of this application.

## Claims

1. A signal detection circuit, **characterized in that** it comprises:
- a sampling circuit (101), comprising a first resistor (R1), a second resistor (R2), and a third resistor (R3) connected in series, wherein the second resistor (R2) is a temperature sensor provided inside a target device, and the third resistor (R3) is connected in parallel with a switch device (K), wherein an on/off state of the switch device (K) is configured to be controlled by a device state of the target device;
- a first chip (102), which supplies power to the sampling circuit (101) through a first power port, and collects a voltage at a sampling point on a line between the first resistor (R1) and the second resistor (R2) through a signal line to obtain a sampled signal value.

2. The signal detection circuit according to the precedent claim, wherein a resistance range of the second resistor (R2) is 0.1KΩ-100KΩ, and a resistance range of the third resistor (R3) is 10KΩ-100KΩ.

3. The signal detection circuit according to the precedent claim, wherein a bias resistor (REF) is connected in series between the first resistor (R1) and the second resistor (R2), the resistance range of the bias resistor (REF) is 0KΩ-30KΩ, and the resistance range of the first resistor (R1) is 2KΩ-30KΩ.

4. The signal detection circuit according to any one of the precedent claims, wherein the signal detection circuit further comprises:
- a first wireless power supply circuit (103), comprising a first coupling coil (L1) connected in parallel at both ends of a second power port and a third power port of the first chip (102), and a first capacitor (C1) connected in parallel with the first coupling coil (L1), wherein the first coupling coil (L1) is configured to obtain electric energy and charge the first capacitor (C1), and the first capacitor (C1) is configured to discharge electric energy to a second wireless power supply circuit (104);
- the second wireless power supply circuit (104), comprising a second capacitor (C2) connected in series between a fourth power port of the first chip (102) and a ground line, and a fourth resistor (R4) connected in parallel with the second capacitor (C2), wherein the first capacitor (C1) charges the second capacitor (C2) through the fourth resistor (R4), and the second capacitor (C2) supplies power to the first chip (102) through the fourth resistor (R4).

5. A signal detection system, **characterized in that** it comprises:
- the signal detection circuit (10) according to any one of the precedent claims, which is configured to be disposed on a target device, and configured to collect the sampled signal value and transmit the sampled signal value to a signal processing circuit (11);
- the signal processing circuit (11), which is in wireless communication with the signal detection circuit (10), is configured to power the signal detection circuit (10), and is further configured to receive the sampled signal value, determine the device state of the target device based on a pre-stored relationship between preset sampling signal value and preset device state, and determine a temperature of the target device based on a pre-stored relationship between preset sampling signal value and preset temperature value under different device states.

6. The signal detection system according to the precedent claim, wherein the signal processing circuit (11) comprises:
- a radio frequency gain circuit, connected to a second chip, comprising a second coupling coil (L2), and configured to control an oscillation of the second coupling coil (L2) to charge the signal detection circuit (10) and receive the sampled signal value;
- a detection processing circuit, connected to the second chip and configured to perform detection processing on the sampled signal value and sending the processed signal to the second chip;
- the second chip, which is configured to determine a device state of the target device based on a pre-stored relationship between preset sampling signal value and preset device state, and to determine a temperature of the target device based on a pre-stored relationship between preset sampling signal value and preset temperature value under different device states.

7. A cooking device, **characterized in that** it comprises:
- the signal detection system according to any one of claims 5 to 6;
- a pot (21) and a lid (22) disposed on a top of the pot (21), the lid (22) being configured to seal the pot (21), wherein the signal detection circuit (10) in the signal detection system is arranged on the lid (22), and the signal processing circuit (11) in the signal detection system is arranged on the pot (21);
- a microcontroller unit (30), the microcontroller unit (30) being in communication with the signal processing circuit (11) and being configured to retrieve the temperature and device state in the signal processing circuit (11) and control an operation of the pot (21) based on the temperature and device state.

8. The cooking device according to the precedent claim, wherein a stopper lever is provided on the lid (22), and an open/closed state of the stopper lever is configured to control the on/off state of the switch device (K).

9. The cooking device according to the precedent claim, wherein the stopper lever is connected to a trigger member, the switch device (K) is an inductive switch, and the trigger member is configured to trigger the on and off state of the inductive switch.

10. The cooking device according to the precedent claim, wherein the trigger member is a magnet, and the inductive switch is a magnetic switch.
